# EUROPÄISCHE PATENTSCHRIFT

(11) **EP 2 602 079 B1**
(45) Veröffentlichungstag und Bekanntmachung des Hinweises auf die Patenterteilung: **21.10.2015**
(21) Anmeldenummer: 12195212.1
(22) Anmeldetag: 03.12.2012
(51) Int. Cl.: B28B 3/26, B29C 47/00, B29C 47/12

(54) **Mundstück**
Mouthpiece
Filière

(30) Priorität: 06.12.2011 DE 202011108664 U
(43) Veröffentlichungstag der Anmeldung: 12.06.2013
(73) Patentinhaber: HÄNDLE GmbH Maschinen und Anlagenbau, 75417 Mühlacker (DE)
(72) Erfinder: Rank Horst, 88048 Friedrichshafen-Kluftern (DE)
(74) Vertreter: Riedel, Peter

(56) Entgegenhaltungen:
- EP-A1- 2 230 057
- JP-A- S62 236 710

## Beschreibung

Die Erfindung bezieht sich auf ein Mundstück, das in einem Kanal einer Strangpresse zur Herstellung von mit Hohlräumen versehenen Formlingen eingebaut werden kann, nach dem Oberbegriff des Schutzanspruches 1.

Aus der EP 19850104917 ist ein Mundstück zu entnehmen, das in eine Strangpresse zur Formung von Hochlochziegeln eingebaut ist. Das Mundstück weist eine Vorsetzplatte auf, die an einem der Strangpresse nachgestalteten Presskopf angebracht ist, durch den die keramischen Massen drallfrei auf das Mundstück zugeführt sind. An der Vorsetzplatte ist eine Kernhalteplatte angebracht, die eine Vielzahl von Längs-und Querstreben aufweist. Um die verformbare keramische Masse in die gewünschte Kontur zu überführen, sind in Pressrichtung der Masse an die Kernhalteplatte eine Vielzahl von Kernhaltestangen angebracht, an deren freien der Kernhalteplatte abgewandten Ende jeweils ein Kern mit einer vorgegebenen Außenkontur befestigt ist. Dadurch, dass zwischen den Kernen ein entsprechender konturierter Hohlraum vorgegeben ist, durch den die Masse mit einer möglichst homogenen Dichte hindurchfließt, entsteht eine vorgegebene Struktur für den Formling, der der Kontur des zu verbauenden Hochlochziegels entspricht.

Da bei dem Hindurchpressen der keramischen Massen erhebliche Reibungen und Druckkräfte entstehen, ist es erforderlich, zwischen der Kernhalteplatte und den Kernen einen bestimmten Abstand einzuhalten, denn die Masse soll im Bereich der Kernhaltestangen und der Kerne möglichst homogen ausgestaltet sein, um eine gleichmäßige Wandstärke des Formlings zu erreichen, wenn die Masse durch die Kerne hindurchgedrückt ist. Um eine solche Homogenität der Masse zu erreichen, sollte der Abstand zwischen der Kernhalteplatte und dem Kern möglichst groß bemessen sein. Je weiter jedoch der Abstand zwischen den Kernen und der Kernhalteplatte vorgegeben wird, desto größer sind die Bewegungsmöglichkeiten der Haltestangen, denn durch die Masse entstehen Reibungs- und Druckkräfte, die zu Schwingungen der Haltestangen führen. Solche Schwingungen sind sehr nachteilig, da dadurch die Kerne aus ihrer vorgesehenen Position verschoben sind, wodurch eine andersartige Konturierung der Formlinge entsteht, die jedoch nicht gewünscht ist. Diese Schwingungen der Kernhaltestangen werden üblicherweise mit geeigneten Maßnahmen reduziert oder verhindert, in dem beispielsweise die Stabilität der Kernhaltestange erhöht wurde. Dies erfolgte mittels festen Werkstoffen, denn das Fließverhalten der Masse sollte möglichst nicht behindert sein.

Aus der JP S62 236710 A ist ein Mundstück, gemäss dem Oberbegriff des Anspruchs 1 zu entnehmen.

Der Erfindung liegt daher die Aufgabe zugrunde, ein Mundstück der eingangs genannten Gattung zur Verfügung zu stellen, durch das der Abstand zwischen der Kernhalteplatte und den Kernen möglichst derart groß bemessen werden kann, dass die durch die Kernhalteplatte und den an dieser angebrachten Kernhaltestangen hindurchgepresste keramische Masse möglichst homogen verteilt ist und gleichzeitig die Kerne, die an den Kernhaltestangen befestigt sind, zuverlässig in ihrer vorgegebenen Position und Ausrichtung fixiert sind, ohne dass das Fließverhalten der Masse beeinträchtigt ist.

Diese Aufgabe ist erfindungsgemäß durch die Merkmale des kennzeichnenden Teils von Schutzanspruch 1 gelöst.

Weitere vorteilhafte Weiterbildungen der Erfindung ergeben sich aus den Unteransprüchen.

Dadurch, dass zumindest zwei benachbarte Kernhaltestangen beabstandet zu der Kernhalteplatte mittels eines Verbinungselementes miteinander fixiert sind, erhöht sich die Steifigkeit der derart miteinander verbundenen Kernhaltestangen, so dass Schwingungen oder sonstige Verschiebungen, die beim Hindurchpressen der keramischen Masse aufgrund der vorhandenen Drücke und Reibungen entstehen könnten, vermieden sind.

Es ist besonders vorteilhaft, wenn mehrere der Verbindungselemente in einer gemeinsamen Ebene angeordnet sind und wenn die Verbindungselemente derart miteinander verbunden sind, dass eine gemeinsame Arretierungsplatte gebildet ist, durch die dann die Vielzahl von Haltestangen vollständig zusammen abgestützt ist, denn durch die Arretierungsplatte entsteht mit den Kernhaltestangen eine Art Fachwerkverbindung, deren Stabilität im Vergleich mit frei stehenden Kernhaltestangen erhöht ist. Je größer der Abstand zwischen der Kernhalteplatte und den an den Kernhaltestangen befestigten Kernen ist, desto mehr dieser Arretierungsplatten bzw. Verbindungselemente können vorgesehen sein, die dann auch in unterschiedlichen jedoch parallel zueinander verlaufenden oder geneigten Ebenen angeordnet sind.

Um das Fließverhalten und die homogene Ausbildung der zu verformenden keramischen Masse möglichst wenig im Bereich zwischen der Kernhalteplatte und den Kernen zu stören, sind die Verbindungselemente bzw. ist die Arretierungsplatte senkrecht oder geneigt zu der Pressrichtung der keramischen Masse ausgerichtet und weist Durchtrittsöffnungen auf, die fluchtend zu den Durchtrittsöffnungen der Kernhalteplatte verlaufen.

Wenn die Arretierungsplatte weiter versteift werden soll, ist es vorteilhaft, in die Aussparungen oder Durchtrittsöffnungen der Arretierungsplatte diagonal oder senkrecht verlaufende Versteifungsstege nach Art einer Fachwerkkonstruktion vorzusehen, durch die die jeweilige Aussparung versteift ist.

Da aufgrund der Eigenschaften der zu verformenden keramischen Masse Reibungen zwischen dieser und den Verbindungselementen bzw. der Arretierungsplatte entsteht, ist es besonders vorteilhaft, wenn die Verbindungselemente bzw. die Arretierungsplatte mit einem Material beschichtet sind, durch das die Festigkeit dieser Bauteile erhöht wird, um Schwingungen, Verschleiß und Zerstörung zu vermeiden. Gleichwirkende tech-nische Maßnahmen, wie beispielsweise die Anformung von Keilen oder Pfeilen, die in Richtung der Pressrichtung der keramischen Masse ausgerichtet sind, um diese vor Erreichen der Arretierungsplatte bzw. der Verbindungselemente aufzuspalten, sind ebenso vorteilhaft, denn dadurch wird erreicht, dass der Strömungswiderstand der Ver-bindungselemente bzw. der Arretierungsplatte und der keramischen Masse reduziert ist.

In der Zeichnung ist ein Ausführungsbeispiel der Erfindung mit zwei unterschiedlichen Ausgestaltungen einer Arretierungsplatte dargestellt, die nachfolgend näher erläutert sind. Im Einzelnen zeigt:
- Figur 1:: ein Mundstück mit einer gekrümmten Kernhalteplatte, an der eine Vielzahl von einteiligen Kernhaltestangen zur Abstützung von Kernen angebracht sind, zwischen denen drei Verbindungselementen eingebaut sind, durch die jeweils zwei benachbarte Kernhaltestangen miteinander fixiert sind, im Schnitt,
- Figur 2:: ein Mundstück mit einer eben ausgestalteten Kernhalteplatte, an der eine Vielzahl von Kernhaltestangen zur Abstützung von Kernen angebracht sind, zwischen denen eine Arretierungsplatte bestehend aus einer Vielzahl von Verbindungselementen gemäß Figur 1 eingebaut ist, durch die die Kernhaltestangen gemeinsam miteinander fixiert sind, im Schnitt und in einem eingebauten Zustand in einer Strangpresse,
- Figur 3:: eine erste Ausgestaltung der Arretierungsplatte gemäß Figur 2, in Draufsicht,
- Figur 4:: eine zweite Ausführungsvariante der Arretierungsplatte gemäß Figur 2, in Draufsicht,
- Figur 5:: eine Weiterbildung der Arretierungsplatte gemäß Figur 4 mit einer Vielzahl von eine Art Fachwerkkonstruktion bildenden Versteifungsstegen, in Draufsicht und
- Figur 6:: die Kernhalteplatte gemäß Figur 1 mit drei unterschiedlich ausgestalteten Haltestangen, im Schnitt.

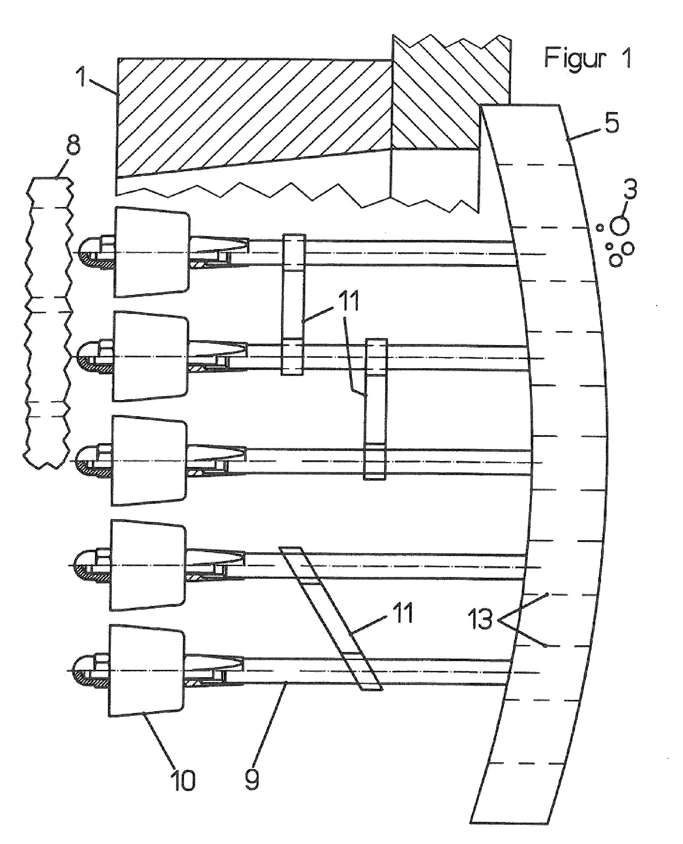

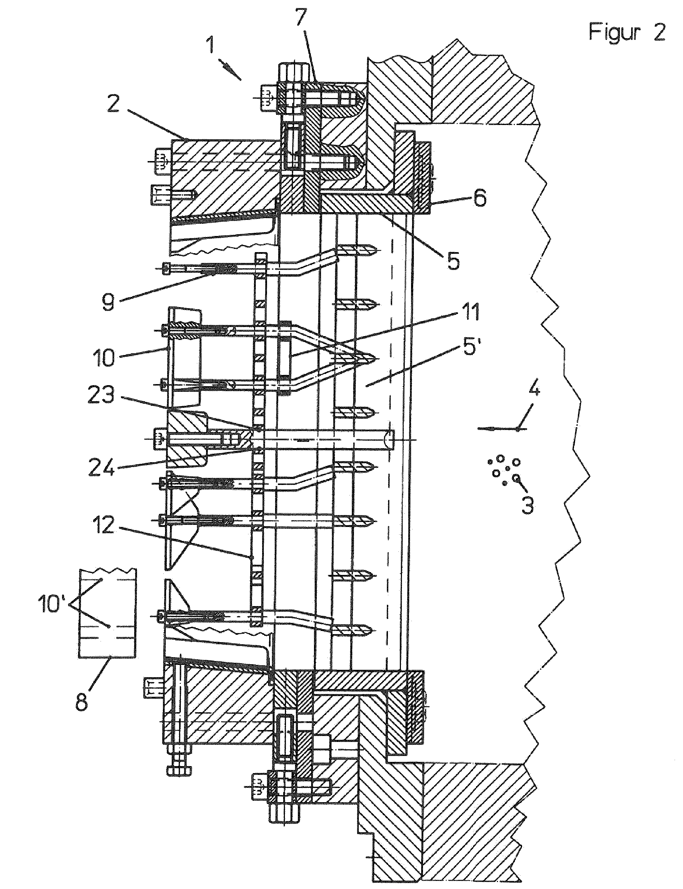

In den Figuren 1 und 2 ist ein Mundstück 1 abgebildet, das in einem Kanal einer Strangpresse zur Herstellung von mit Hohlräumen 10' versehenen Formlinge 8 eingebaut ist. In dem Kanal ist eine nicht dargestellte Förderschnecke vorgesehen, durch die eine keramische Masse 3 in Richtung des Mundstückes 1 transportiert ist. Die Pressrichtung der Masse 3 ist mit der Bezugsziffer 4 gekennzeichnet. Um die Masse 3 möglichst drallfrei zur besseren Verformung an das Mundstück 1 zu überführen, ist ein Presskopf vorzusehen, an dem eine Vorsetzplatte 5' befestigt ist.

Das Mundstück 1 weist einen Mundstückrahmen 2 auf, der an der Vorsetzplatte 5' befestigt ist. Die Masse 3 ist durch das Mundstück 1 mit Hilfe der Strangpresse zu drücken, um einen mit den Hohlräumen 10' versehenen Formling 8 zu erzeugen. An der Vorsetzplatte 5' ist desweiteren eine Kernhalteplatte 5 befestigt, die eine Vielzahl von Quer- und Längsstreben aufweist, so dass die keramische Masse 3 durch die von den Längs- und Querstreben eingeschlossenen Durchdrücksöffnung hindurchgedrückt ist. Die Menge der Masse 3 vor und hinter der Kernhalteplatte 5 bezogen auf die Press-richtung 4 ist mittels eines Schiebers 6 bzw. einer Schieberplatte 7 bewerkstelligt, die radial in Richtung des Kanals der Strangpresse in ihrer Position veränderbar sind, so dass dadurch die an die Kernhalteplatte 5 bzw. die diese verlassende Masse 3 einstellbar ist, in dem die Durchtrittsquerschnittsfläche verkleinert oder vergrößert ist.

Die Kernhalteplatte 5 besteht also aus einem Gitter, an dem vereinzelt eine Vielzahl von Kernhaltestangen 9 befestigt sind. Aufgrund der hohen Reibung, die durch das Hindurchdrücken der Masse 3 entlang den Kernhaltestangen 9 entsteht, können an deren freien Ende, an denen jeweils ein Kern 10 angebracht ist, Schwingungen entstehen, die dazu führen, dass der Kern 10 aus seiner vorgegebenen Position bewegt ist. Dies führt zu einer Veränderung der Wabenstruktur der Formlinge 8, die vermieden werden soll.

Um daher die Stabilität der Kernhaltestangen 9 zu erhöhen und gleichzeitig den Abstand zwischen den Kernen 10 und der Kernhalteplatte 5 möglichst groß ausbilden zu können, um die Homogenität der Masse 3 zwischen der Kernhalteplatte 5 und den Kernen 10 beizubehalten, ist mindestens ein Verbindungselement 11 gemäß Figur 1 vorgesehen, das zwischen zwei benachbarten Kernhaltestangen 9 angebracht ist.

Die Verbindungselemente 11 können dabei senkrecht zu der Pressrichtung 4 oder geneigt zu dieser angeordnet sein. Die Einbausituation der Verbindungselemente 11 hängt im Wesentlichen davon ab, in welche Richtung der höchste Kraftanteil abzustützen ist. Darüberhinaus ist zu beachten, dass die Homogenität der keramischen Masse 3 durch den Einbau der Verbindungselemente 11 möglichst wenig gestört ist und somit auch das Fließverhalten der keramischen Masse 3 nicht unnöigerweise behindert wird.

Aus Figur 2 ist ersichtlich, dass die Verbindungselemente 11 vollständig über die gesamte Anzahl der Kernhaltstangen 9 verlaufen und folglich eine gemeinsame Arretierungsplatte 12 bilden, durch die die Kernhaltestangen 9 gemeinsam und vollständig abgestützt sind.

Darüberhinaus ist aus den Figuren 1 und 2 ersichtlich, dass die Konturierung der Kernhalteplatte 5 sowohl gekrümmt als auch eben ausgestaltet sein kann. Die Längen der Kernhaltestangen 9 gleichen dabei den möglicherweise entstehenden Längenunterschied aus, so dass die Kerne 10 in einer gemeinsamen Ebene verlaufen.

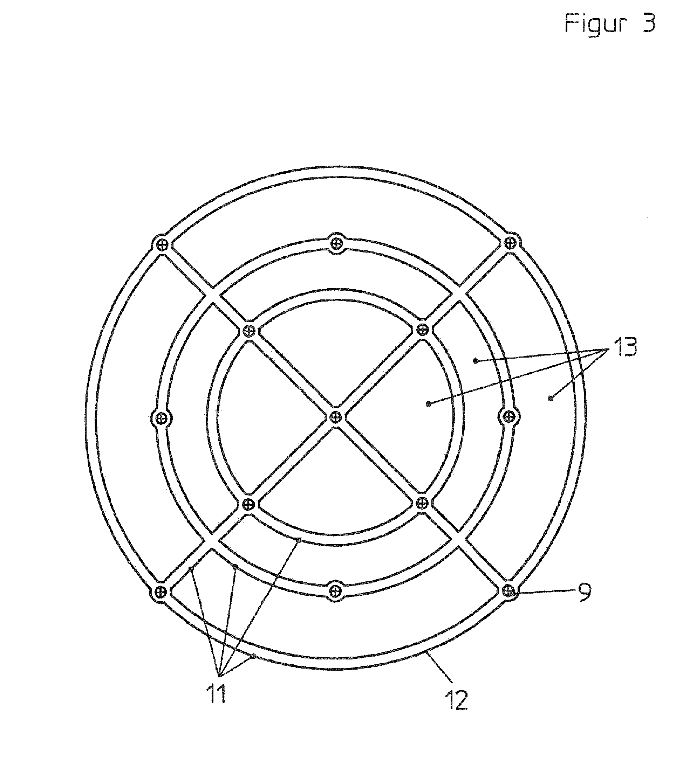

Gemäß Figur 3 sind die Verbindungselemente 11 als Kreuz ausgestaltet, zwischen denen drei mit unterschiedlichen Radien ausgestaltete weitere Verbindungselemente 11 angeordnet sind, die im Wesentlichen bogenförmig verlaufen und die gemeinsam eine Arretierungsplatte 12 bilden. Zwischen den Verbindungselementen 11 ist eine bogenförmige oder halbkreis- bzw. viertelkreisförmige Aussparung 13 vorgesehen, durch die die keramische Masse 3 hindurchfließt. Die Kernhaltestangen 9 sind teilweise an der Arretierungsplatte 12 gehalten und andere Kernhaltestangen 9 durchgreifen die Arretierungsplatte 12.

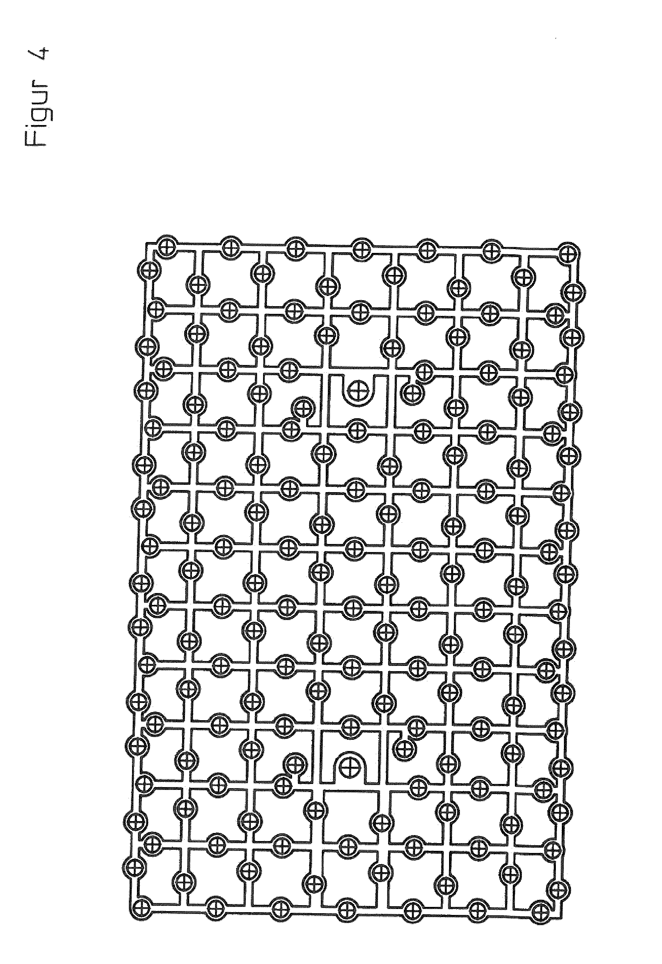

In Figur 4 ist eine andersartige Ausgestaltung der Arretierungsplatte 12' zu entnehmen, die aus einer Vielzahl von senkrecht zueinander verlaufenden Verbindungselementen 11 besteht. Dabei schließen vier benachbarte Verbindungselemente 11 die Aussparung 13' ein, die rechteckförmig ausgestaltet ist. Die die Aussparungen 13' einschließenden Seitenkanten sind mit der Bezugsziffer 14 gekennzeichnet, auf denen die jeweilige Kernhaltestange 9 angeordnet ist.

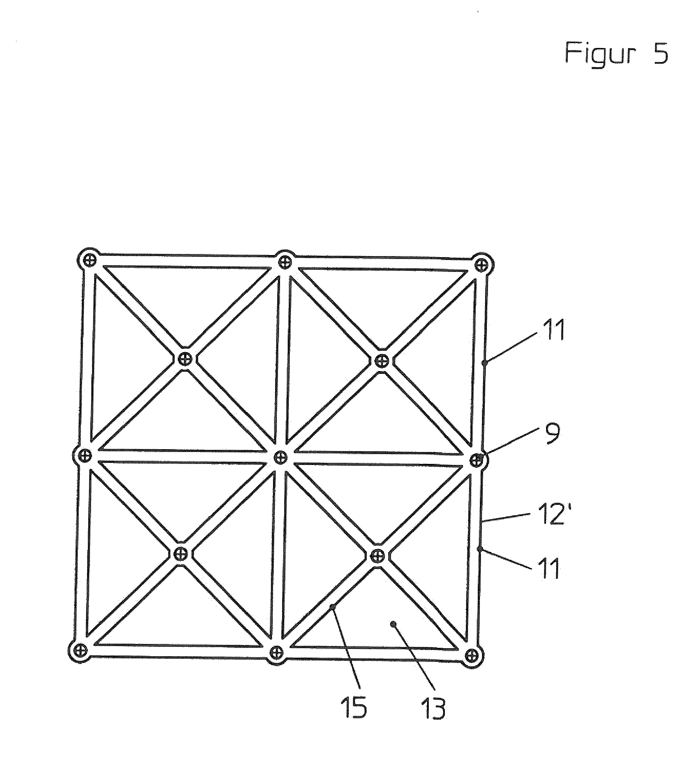

Aus Figur 5 ist ersichtlich, dass die Steifigkeit der Arretierungsplatte 12' durch eine Fachwerkkonstruktion erhöht ist. Dabei sind Versteifungsstege 15 im Inneren der jeweiligen Aussparung 13' vorgesehen, die eine dreieckförmige Querschnittskontur aufweisen.

In den gezeigten Ausführungsbeispielen sind die Verbindungselemente 11 in einer gemeinsamen linear verlaufenden Ebene angeordnet, die im Wesentlichen parallel und beabstandet zu der Kernhalteplatte 5 und den Kernen 10 verläuft. Die einzelnen Verbindungselemente 11 können ohne weiteres in unterschiedlichen Ebenen angebracht sein. Es ist auch denkbar, zwei oder mehrere der Arretierungsplatten 12 bzw. 12' zwischen der Kernhalteplatte 5 und den Kernen 10 anzuordnen, um die Steifigkeit der Kernhaltestangen 9 zu erhöhen.

Es ist auch möglich, die Verbindungselemente 11 mit einem bestimmten Krümmungsradius zu versehen, so dass diese zwischen zwei benachbarten Kernhaltestangen 9 bogenförmig verlaufen und beispielsweise in Pressrichtung 4 gekrümmt sind, um den von den Massen 3 aufgebrachten Druckkräften eine stabilere Form nach Art eines Staudammes entgegenzusetzen.

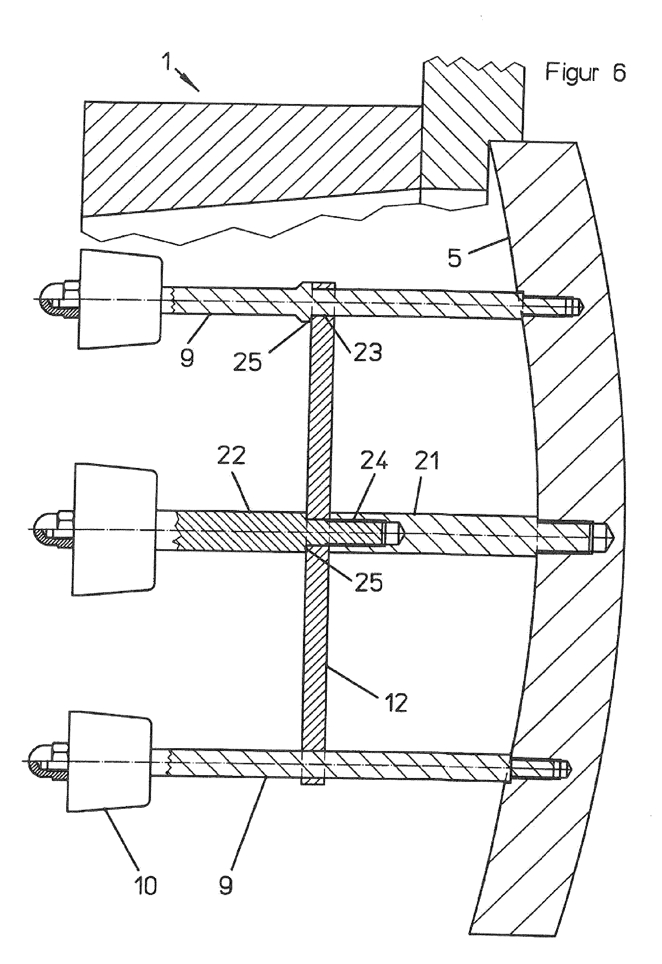

In Figur 6 sind drei unterschiedliche Befestigungsmöglichkeiten der Arretierungsplatte 12 an den Kernhaltestangen 9 gezeigt. Zunächst kann die Kernhaltestange 9 einteilig ausgestaltet sein und ist an der gekrümmten Vorsetzplatte 5 eingeschraubt. Gleichwirkende Befestigungsmöglichkeiten, wie beispielsweise Kleben, Schweißen oder dergleichen, sind wahlweise möglich.

Eine weitere Alternative, die Arretierungsplatte 12 an den Kernhattestangen 9 zu fixieren, ist der mittleren Kernhaltestange 9 zu entnehmen, die aus einem ersten und einem zweiten Haltestift 21 bzw. 22 besteht. Der erste Haltestift 21 ist an die Kernhalteplatte 5 angeschraubt und der zweite Haltestift durchgreift die Arretierungsplatte 12 und ist mittels eines Gewindes 24 an dem ersten Haltestift 21 gehalten. Desweiteren weist der zweite Haltestift 22 einen umlaufenden Anschlagsbund 25 auf, der an der Arretierungsplatte 12 anliegt und somit den Abstand zwischen der Arretierungsplatte 12 und dem Kern 10 vorgibt. Aufgrund der Krümmung der Kernhalteplatte 5 sind die Längen der ersten Haltestifte 21 an den Krümmungsradius der Kernhalteplatte 5 anzupassen, so dass die Kerne 10 in einer gemeinsamen Ebene angeordnet sind.

Desweiteren können die Haltestangen 9 auch einteilig ausgestaltet sein, und zwar derart, dass die der Kernhalteplatte 5 zugewandten Teilbereiche der Kernhaltestange 9 die Arretierungsplatte 12 durchgreifen und der zweite Teilbereich der Kernhaltestange 9 aufgrund einer an diesem angeformten Anschlagsbund 25 an der Arretierungsplatte 12 anliegen und somit in die Arretierungsplatte 12 eingearbeiteten Durchgangsöffnungen 23 lediglich teilweise durchgreifen und an dieser jedoch abgestützt sind.

## Patentansprüche

1. Mundstück (1), das in einem Kanal einer Strangpresse zur Herstellung von mit Hohlräumen (10') versehenen Formlingen (8), insbesondere aus keramischen Massen (3), eingebaut werden kann bestehend aus einer an dem Kanal der Strangpresse zu befestigenden Kernhalteplatte (5), durch die das Mundstück (1) bezogen auf die Pressrichtung (4) der Masse (3) von der Strangpresse getrennt ist und aus einer Vielzahl von auf der Kernhalteplatte (5) angebrachten und in Pressrichtung (4) der Masse (3) ausgerichteten Kernhaltestangen (9), an deren von der Kernhalteplatte (5) abgewandten Ende jeweils ein Kern (10) aufgesetzt ist, durch die die Hohlräume (10') des Formlings (8) erzeugt sind,
**dadurch gekennzeichnet,**
**dass** zwischen der Kernhalteplatte (5) und den Kernen (10) mindestens ein Verbindungselement (11) angeordnet ist, durch das zumindest zwei benachbarte Kernhaltestangen (9) miteinander verbunden sind, und dass das jeweilige Verbindungselement (11) senkrecht oder geneigt zu der Pressrichtung (4) der Masse (3) ausgerichtet ist.

2. Mundstück nach Anspruch 1,
**dadurch gekennzeichnet,**
**dass** die einzelnen Verbindungselemente (11) in einer gemeinsamen Ebene und/oder in zueinander unterschiedlichen Ebenen angeordnet sind und/oder dass die Verbindungselemente (11) eben und/oder gekrümmt ausgestaltet sind.

3. Mundstück nach Anspruch 2,
**dadurch gekennzeichnet,**
**dass** die in einer gemeinsamen Ebene verlaufenden Verbindungselemente (11) jeweils mit den benachbarten Verbindungselementen (11) verbunden sind, und dass die derart zusammengefügten Verbindungselemente (11) eine gemeinsame Arretierungsplatte (12, 12') bilden, durch die die Vielzahl von Kernhaltestangen (9) ausgerichtet und ortsfest gehalten ist.

4. Mundstück nach Anspruch 3,
**dadurch gekennzeichnet,**
**dass** die Arretierungsplatte (12) eine Vielzahl von mehreckigen, runden, halbkreisförmigen oder elliptischen Aussparungen (13, 13') aufweist und dass an den Seitenkanten (14) der Aussparung (13, 13') jeweils eine oder mehrere der Kernhaltestangen (9) angeordnet ist.

5. Mundstück nach Anspruch 4,
**dadurch gekennzeichnet,**
**dass** die Arretierungsplatte (12') mit Hilfe von diagonal oder senkrecht verlaufenden Versteifungsstegen (15) nach Art einer Fachwerkkonstruktion versteift ist, die im Inneren der jeweiligen Aussparung (13) angeordnet sind.

6. Mundstück nach einem der vorgenannten Ansprüche,
**dadurch gekennzeichnet,**
**dass** jeder der Kernhaltestangen (9) aus zwei Haltestiften (21, 22) besteht, dass der erste Haltestift (21) an der Kernhalteplatte (5) befestigt und der zweite Haltestift (22) an dem freien von der Kernhalteplatte (5) abgewandten Ende des ersten Haltestiftes (21) der Kernhaltestange (5) angebracht ist.

7. Mundstück nach Anspruch 6,
**dadurch gekennzeichnet,**
**dass** die beiden Haltestifte (21, 22) der jeweiligen Kernhaltestange (9) an der Kernhalteplatte (5) bzw. miteinander verschraubt und/oder verklebt sind.

8. Mundstück nach Anspruch 3,
**dadurch gekennzeichnet,**
**dass** die einzelnen Arretierungsplatten (12, 12') in unterschiedlichen Ebenen angeordnet sind, die jeweils parallel und beabstandet zu der Kernhalteplatte (5) ausgerichtet sind.

9. Mundstück nach einer der vorgenannten Ansprüche,
**dadurch gekennzeichnet,**
**dass** die Verbindungselemente (11) mit einem Fließwiderstand reduzierenden Material beschichtet sind und /oder dass die Verbindungselemente (11) in Pressrichtung (4) keil- oder pfeilförmig ausgestaltet sind.

10. Mundstück nach einem der vorgenannten Ansprüche,
**dadurch gekennzeichnet,**
**dass** an die jeweilige Haltestange (9) ein Anschlagsbund (25) angeformt ist, der an den Arretierungsplatten (12) oder dem Verbindungselement (11) anliegt.

11. Mundstück nach Anspruch 3,
**dadurch gekennzeichnet,**
**dass** die Kernhalteplatte (5) und/oder die Arretierungsplatte (12) in Pressrichtung (4) der Masse (3) nach Art eines Staudammes gekrümmt oder gebogen ausgestaltet ist.

## Claims

1. Mouthpiece (1) which can be incorporated in a channel of an extrusion press to produce preforms (8), in particular from ceramic masses (3), provided with cavities (10'), consisting of a core holding plate (5) to be fastened to the channel of the extrusion press, through which core holding plate (5) the mouthpiece (1) is separated from the extrusion press in relation to the pressing direction (4) of the mass (3), and of a plurality of core holding rods (9) attached to the core holding plate (5) and orientated in the pressing direction (4) of the mass (3), a core (10) being placed at the end of each core holding rod (9) facing away from the core holding plate (5) (5), through which core holding rods (9) the cavities (10') of the preform (8) are produced,
**characterised in that** at least one connecting element (11) is arranged between the core holding plate (5) and the cores (10), through which at least two adjacent core holding rods (9) are connected to each other, and the respective connecting element (11) is orientated vertically or inclined relative to the pressing direction (4) of the mass (3).

2. Mouthpiece according to claim 1,
**characterised in that** the individual connecting elements (11) are arranged in a shared plane and / or in planes differing from each other, and / or the connecting elements (11) are designed to be planar and / or curved.

3. Mouthpiece according to claim 2,
**characterised in that** the connecting elements (11) extending in a shared plane are each connected to the adjacent connecting elements (11), and the connecting elements (11) joined together in this way form a shared detent plate (12, 12'), through which the plurality of core holding rods (9) are orientated and held in a fixed position.

4. Mouthpiece according to claim 3,
**characterised in that** the detent plate (12) has a plurality of multi-cornered, round, semi-circular or elliptic recesses (13, 13') and one or more of the core holding rods (9) is / are respectively arranged on the side edges (14) of the recess (13, 13').

5. Mouthpiece according to claim 4,
**characterised in that** the detent plate (12') is reinforced with the aid of diagonally or vertically extending reinforcing webs (15), in the manner of a lattice-type construction, which are arranged inside the respective recess (13).

6. Mouthpiece according to one of the preceding claims,
**characterised in that** each of the core holding rods (9) consists of two holding pins (21, 22), the first holding pin (21) is fastened to the core holding plate (5) and the second holding pin (22) is attached to the free end, facing away from the core holding plate (5), of the first holding pin (21) of the core holding rod (5).

7. Mouthpiece according to claim 6,
**characterised in that** the two holding pins (21, 22) of the respective core holding rod (9) are screwed and / or stuck to each other on the core holding plate (5).

8. Mouthpiece according to claim 3,
**characterised in that** the individual detent plates (12, 12') are arranged in different planes which are each orientated parallel and spaced apart from the core holding plate (5).

9. Mouthpiece according to one of the preceding claims,
**characterised in that** the connecting elements (11) are coated with a flow resistance reducing material and / or the connecting elements (11) are designed to be wedge-shaped or arrow-shaped in the pressing direction (4).

10. Mouthpiece according to one of the preceding claims,
**characterised in that** a stop collar (25) is formed on the respective holding rod (9), the stop collar (25) lying against the detent plates (12) or the connecting element (11).

11. Mouthpiece according to claim 3,
**characterised in that** the core holding plate (5) and / or the detent plate (12) is / are designed to be curved or bent in the manner of a dam in the pressing direction (4) of the mass (3).

## Revendications

1. Filière (1) qui peut être montée dans un canal d'une extrudeuse pour la fabrication de briques crues (8) pourvues de cavités (10'), en particulier à partir de masses céramiques (3), composée d'une plaque porte-noyaux (5) qui est à fixer au canal de l'extrudeuse et grâce à laquelle la filière (1) est séparée de l'extrudeuse par rapport au sens d'extrusion (4) de la masse (3), et de plusieurs barres porte-noyaux (9) qui sont montées sur la plaque porte-noyaux (5) et orientées dans le sens d'extrusion (4) de la masse (3), et sur les extrémités, opposées à la plaque porte-noyaux (5), desquelles sont posés des noyaux respectifs (10) grâce auxquels sont formées les cavités (10') de la brique crue (8),
**caractérisée en ce qu'**il est prévu, entre la plaque porte-noyaux (5) et les noyaux (10), au moins un élément de liaison (11) grâce auquel au moins deux barres porte-noyaux (9) voisines sont reliées entre elles, et **en ce que** chaque élément de liaison (11) est perpendiculaire ou incliné par rapport au sens d'extrusion (4) de la masse (3).

2. Filière selon la revendication 1,
**caractérisée en ce que** les éléments de liaison (11) individuels sont disposés dans un plan commun et/ou dans des plans différents, et/ou **en ce que** les éléments de liaison (11) ont une forme plane et/ou courbe.

3. Filière selon la revendication 2,
**caractérisée en ce que** les éléments de liaison (11) qui s'étendent dans un plan commun sont reliés aux éléments de liaison (11) voisins, et **en ce que** les éléments de liaison (11) ainsi assemblés forment une plaque d'arrêt commune (12, 12') grâce à laquelle les barres porte-noyaux (9) sont retenues de manière orientée et fixe.

4. Filière selon la revendication 3,
**caractérisée en ce que** la plaque d'arrêt (12) comporte plusieurs évidements (13, 13') polygonaux, ronds, semi-circulaires ou elliptiques, et **en ce qu'**il est prévu sur chacun des bords latéraux (14) des évidements (13, 13') une ou plusieurs barres porte-noyaux (9).

5. Filière selon la revendication 4,
**caractérisée en ce que** la plaque d'arrêt (12') est renforcée, à la manière d'une construction en treillis, à l'aide de raidisseurs (15) qui s'étendent en diagonale ou perpendiculairement et qui sont disposés à l'intérieur de chaque évidement (13).

6. Filière selon l'une des revendications précédentes,
**caractérisée en ce que** chacune des barres porte-noyaux (9) se compose de deux tiges de support (21, 22), **en ce que** la première tige de support (21) est fixée à la plaque porte-noyaux (5) tandis que la seconde tige de support (22) est montée sur l'extrémité libre, opposée à la plaque porte-noyaux (5), de la première tige de support (21) de ladite barre porte-noyaux (5).

7. Filière selon la revendication 6,
**caractérisée en ce que** les deux tiges de support (21, 22) de chaque barre porte-noyaux (9) sont vissées et/ou collées à la plaque porte-noyaux (5) ou l'une à l'autre.

8. Filière selon la revendication 3,
**caractérisée en ce que** les plaques d'arrêt (12, 12') individuelles sont disposées dans des plans différents qui sont parallèles à la plaque porte-noyaux (5) et espacés de celle-ci.

9. Filière selon l'une des revendications précédentes,
**caractérisée en ce que** les éléments de liaison (11) sont revêtus d'un matériau réduisant la résistance au fluage et/ou **en ce que** les éléments de liaison (11) ont une forme cunéiforme ou une forme de flèche dans le sens d'extrusion (4).

10. Filière selon l'une des revendications précédentes,
**caractérisée en ce qu'**il est prévu, rapportée sur chaque barre de support (9), une collerette de butée (25) qui est appliquée contre les plaques d'arrêt (12) ou contre l'élément de liaison (11).

11. Filière selon la revendication 3,
**caractérisée en ce que** la plaque porte-noyaux (5) et/ou la plaque d'arrêt (12) a une forme courbe ou arquée dans le sens d'extrusion (4) de la masse (3), à la manière d'un barrage de retenue.
